# EUROPEAN PATENT SPECIFICATION

(11) **EP 2 677 109 B1**
(45) Date of publication and mention of the grant of the patent: **16.09.2015**
(21) Application number: 13172934.5
(22) Date of filing: 20.06.2013
(51) Int. Cl.: E06B 9/323, F16B 5/12

(54) **Fastener for a sunshade**
Befestiger für einen Sonnenschutz
Fixation pour une protection solaire

(30) Priority: 21.06.2012 FI 20124126 U
(43) Date of publication of application: 25.12.2013
(73) Proprietor: Suomen Visor Oy, 90440 Kempele (FI)
(72) Inventor: Junttila, Mikko, 90420 Oulu (FI); Haapalahti, Teuvo, 90460 Oulunsalo (FI)
(74) Representative: Berggren Oy Ab

(56) References cited:
- WO-A1-2007/065972
- CA-A1- 2 697 638
- US-A- 3 708 927

## Description

The invention relates to a fastener for a sunshade, including a bracket part, a first fastening projection projecting in the first direction from the level of the bracket part, and a second fastening projection projecting in the second direction from the level of the bracket part, the width of which first and second fastening projections is substantially smaller than the length of the fastener.

In glazed balconies, often blinds are used as sunshades in order to prevent access of excess solar radiation to the balcony. Sunshades are usually fastened to the edge profile of the balcony glazing by separate fasteners which comprise gripping elements for fastening to the sunshade, and a fastening element for fastening into the edge profile of the balcony glazing.

In publication WO 2007/065972, a fastener for a sunshade is disclosed, where L-shaped gripping projections pointing at each other are arranged in a plate-like base for fastening to the edge rail of the sunshade. On the second surface of the base, there is a hook-like fastening element for fastening to the edge profile of the glazing. By means of the fastening element the fastener can be fastened to the gap of the edge profile without tools or auxiliary devices. The bracket is fastened to the edge rail of the sunshade by pushing the edge rail between the gripping projections. A disadvantage of this solution is that the gripping projections remain exposed, whereby they impair the appearance of the sunshade.

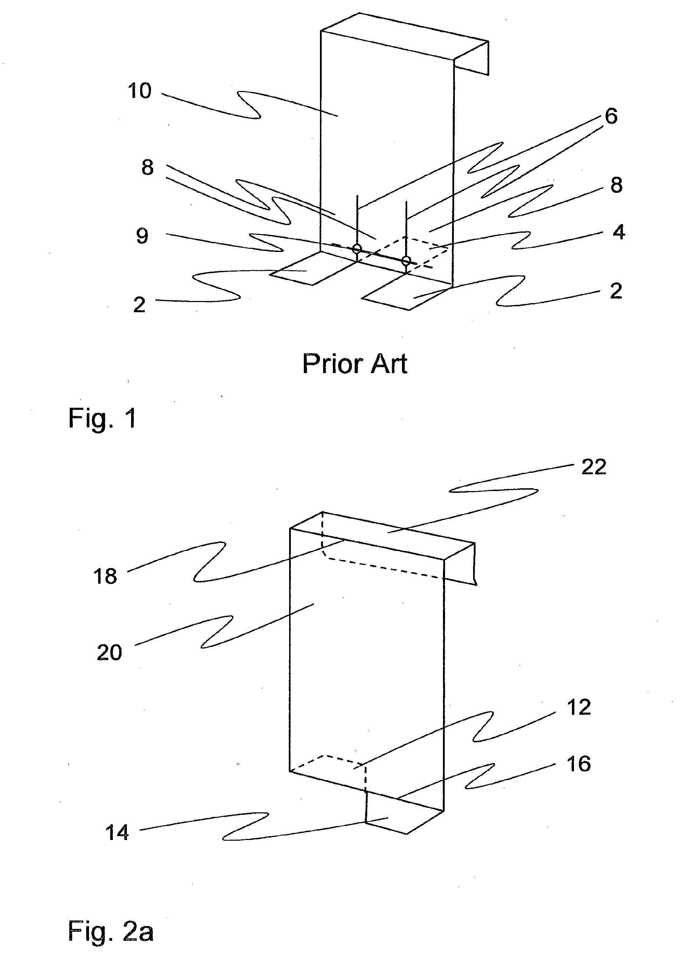

Figure 1 shows a fastener for a sunshade according to prior art, which fastener is designed to be fastened to the gap in the edge rail of the sunshade. In this fastener, the gripping elements comprise a bracket plate 10, the first edge of which comprises two first fastening projections 2 pointing at the first direction from the bracket plate, and one second fastening projection 4 pointing at the second direction from the bracket plate. The second fastening projection is situated between the first fastening projections. In the first edge of the bracket plate, there are cuttings 6 that form three elastic tongues 8 in the edge of the bracket plate. The fastening projections 2, 4 are provided as extensions of the tongues in right angle to the tongues. By bending the elastic tongues, the free edges of the first and second fastening projections can be moved towards each other, which enables fitting of the fastening projections through the narrow orifice of the gap in the edge rail of the sunshade.

The elasticity of the tongues which is necessary from the point of view of installing of the bracket is also disadvantageous. The tongues and the gripping brackets may bend by the force of the own weight of the sunshade or by the force of stresses, such as wind, applied to it, whereby the fastener may become unfastened from the edge rail. In order to ensure the strength of the fixing, at the edge of the tongues, in connection with the installation, a thin rod-shaped locking pin 9 is mounted, which prevents the tongues from bending. Mounting of the locking pin is a procedure requiring accuracy and dexterity which slows down and hampers the installing of the sunshade, especially during cold seasons.

The object of the invention is to introduce a fastener for a sunshade by means of which the disadvantages and drawbacks related to the prior art can be substantially minimised.

The objects according to the invention are achieved by means of a fastener for a sunshade which is characterized by what is disclosed in the independent claim. Some preferred embodiments of the invention are disclosed in the dependent claims.

The fastener for a sunshade being the object of the invention comprises a bracket part, a first fastening projection projecting in the first direction from the level of the bracket part, and a second fastening projection projecting in the second direction from the level of the bracket part. The width of the first and the second fastening projection is substantially smaller than the length of the fastener. Hereby, by the width of the fastening projection its dimension in longitudinal direction of the fastener is meant. The first fastening projection is at the first end of the fastener when viewed in the longitudinal direction of the fastener, and the second fastening projection is at the second end of the fastener when viewed in the longitudinal direction of the fastener. At the first end, there are no fastening projections projecting in the second direction from the level of the bracket part, and at the second end, there are no projections projecting in the first direction of the level of the bracket part that is at both ends of the fastening projection, there are fastening projections projecting in only one direction. In this description, by fastening projection is meant such a structural element, by means of which the fastener is fastened to the edge rail of a sunshade. At the first end, there may be projection-like elements projecting in the second direction, and at the second end, there may be projection-like elements projecting in the first direction which have no direct effect on the fastening between the fastener and the edge rail. The longitudinal direction of the fastener is the same as the direction of the edge rail when the fastener is installed in its position.

In a preferred embodiment of the invention, the bracket part is a plate-like element comprising a first edge, to which first edge the first fastening projection and the second fastening projection are arranged. Preferably, the first and the second fastening projection are substantially parallel, plate-like elements, and the first fastening projection turns at the first edge of the bracket part to the first direction, and the second fastening projection turns at the first edge of the bracket part to the second direction.

In a second preferred embodiment of the fastener according to the invention, the bracket part comprises a second edge, in which second edge there is a fastening element for fastening to the edge profile of the glazing. Preferably, said fastening element is formed by forming the second edge of the plate-like bracket part into a trough-like shape.

A third preferred embodiment of the fastener according to the invention is a one-piece, substantially rigid part. By the substantially rigid part it is meant that the parts of the fastener, especially the fastening projections, are not remarkably elastic, that is, resilient deformations do not remarkably take place during installation of the fastener. Preferably, the material of the fastener is metal, such as aluminium. The sufficient rigidity of the fastener is achieved, for example, by manufacturing the fastener of a continuous aluminium plate by suitable plate machining methods.

An advantage of a fastener according to the invention is that it is a one-piece part that can be installed to its position and, if required, detached manually without any tools.

A further advantage of the invention is that fastening it to the edge rail of a sunshade is quick and simple.

Furthermore, an advantage of the invention is that it is fastened to the edge rail in a reliable and load-resistant manner.

In the following, the invention will be described in detail. In the description, reference is made to the enclosed drawings, in which
Figure 1 shows by way of an example a fastener for a sunshade according to the prior art viewed diagonally from above,
Figure 2a shows by way of an example a fastener for a sunshade according to the invention viewed diagonally from above,
Figures 2b and 2c show fastening of the fastener for a sunshade of Figure 2a into the edge rail of the sunshade,
Figure 3a shows by way of an example a preferred embodiment of a fastener for a sunshade viewed diagonally from above,
Figures 3b and 3c show fastening of the fastener for a sunshade of Figure 3a into the edge rail of the sunshade, and
Figure 4 shows a fastener for a sunshade according to the invention when fastened to the edge profile of the glazing.

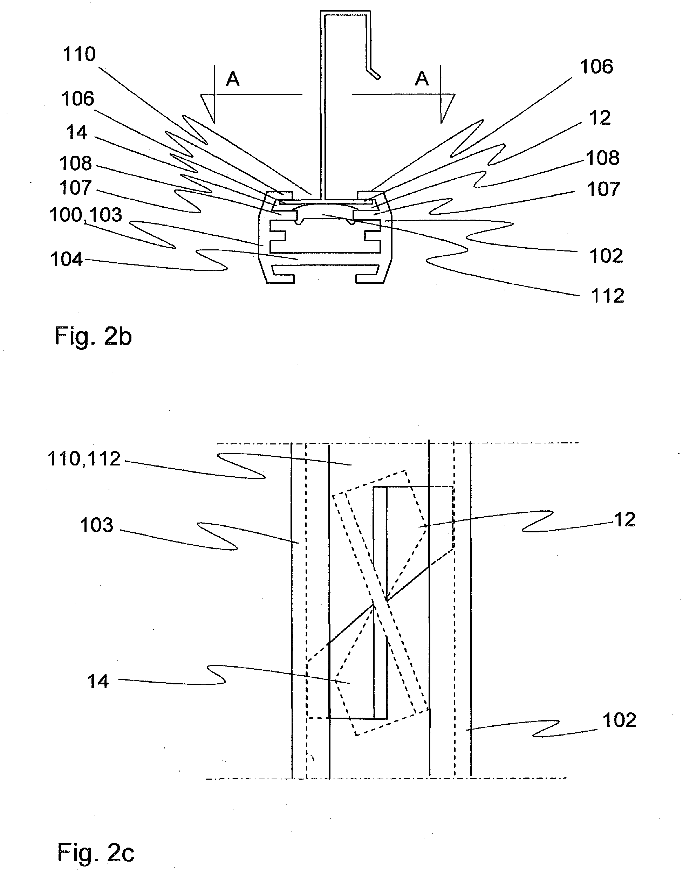

Figure 2a shows by way of an example a fastener for a sunshade according to the invention viewed diagonally from above. The fastener comprises a plate-like, rectangular bracket part 20 which comprises a first edge 16 and a second edge 18 parallel to the first edge. The first edge comprises two plate-like fastening projections; the first fastening projection 12 and the second fastening projection 14. The first fastening projection turns from the first edge of the bracket part substantially in right angle to the first direction, and the second fastening projection turns from the first edge of the bracket part substantially in right angle to the second direction. Thus, the first and the second fastening projection are in a plane that is substantially in right angle to the plane of the fastening element. The longitudinal direction of the fastener is the same as the direction of the first edge 16 of the bracket part. Thus, the length of the fastener is equal to the length of the first edge of the bracket. The fastener is installed in its position in the edge rail of the sunshade such that the first edge of the bracket part is substantially parallel to the longitudinal direction of the edge rail (Fig. 2c).

The first fastening projection 12 is at the first end when viewed in the longitudinal direction of the fastener, and the second fastening projection 14 is at the second end when viewed in the longitudinal direction of the fastener. The first and the second fastening projections are elements of substantially same shape and size. The width of the base portion of the fastening projections, that is its reach in direction of the first edge of the bracket part, is substantially half of the width of the bracket part. The second longitudinal edge of the fastening projections is inclined such that the width of the tips of the fastening projections is substantially smaller than the width of the base portion.

At the second edge 18 of the bracket part there is a trough-shaped fastening element 22 by means of which the fastener can be fastened to the edge profile of the balcony glazing. The fastening element is formed by forming the area of the second edge of the bracket part into a trough-like shape opening towards the first edge of the bracket part. The fastener is made of one rectangular, plate-like piece by forming the fastening projections in the first edge of the piece and the trough-like fastening element in the second edge of the piece. The material of the bracket part is aluminium. The thickness and rigidity of the plate-like parts of the fastener are so great that the fastener is a substantially rigid piece. By this it is meant that the parts of the fastener, especially the fastening projections, are not remarkably elastic, that is, resilient deformations do not remarkably take place during installation of the fastener.

Figures 2b and 2c show by way of an example the fastening of the fastener shown in Fig. 2a to the edge rail 100 of a sunshade. Figure 2b shows a fastener fastened to the edge rail in a cross-sectional view, and Figure 2c shows the fastener of Figure 2b in a top view, shown from the sectional plane A-A. The edge rail of the sunshade is a continuous aluminium profile with two sides, the first side 102 and the second side 103, joined together by a neck 104. The first and the second sides are mirror images to each other in their cross-section. At the edges of the sides, on the inner surfaces of the sides, there are edge ribbons 106 in longitudinal direction of the edge rail that define a gap 110 between them. On the inner surfaces of the sides, between the edge ribbons and the neck, there is a projection 107 in the longitudinal direction of the edge rail such that between the upper edge rail and the projection there is a groove 108. Between the first side 102 and the second side 103 there is an elastic, slightly convex upwards strip 112 made of plastic, leaning at its edges on the free edges of the projections.

The fastener according to the invention is fastened to the edge rail so that the tip of the first fastening projection 12 takes it position in the groove 108 of the first side 102 of the edge rail 100, and the tip of the second fastening projection 14 takes its position in the groove 108 of the second side 103 of the edge rail. The height of the groove, the thickness of the strip 112 and the thicknesses of the fastening projections can be dimensioned so that an installed fastener forces the strip to move slightly towards the neck 104. From the strip, made of elastic material, a force is applied to the installed fastener that pushes the tips of the fastening projections tightly against the edge ribbons 106. Thereby, between the edge ribbons and the fastening projections, and on the other hand, between the fastening projections and the strip, there are frictional forces effecting and preventing the installed fastener from moving in the gap 110.

Fastening of the fastener takes place so that the fastener is set on the gap 110 of the edge rail 100 in an inclined position in relation to the longitudinal direction of the edge ribbon, shown by a broken line in Figure 2c. In this position, the fastening projections 12, 14 of the fastener have enough space to move through the edges of the gap 110 against the strip 112. Thereafter, the fastener is pushed towards the strip and at the same time rotated about an axis in the direction of the normal of the strip into the locking position shown by a continuous line in Figure 2c. In the locking position, the tips of the fastening projections extend to the grooves of the sides 102, 103, and the longitudinal direction of the fastener is substantially parallel to the longitudinal direction of the edge rail. The fastener is detached from the edge rail by rotating the fastener in the opposite direction.

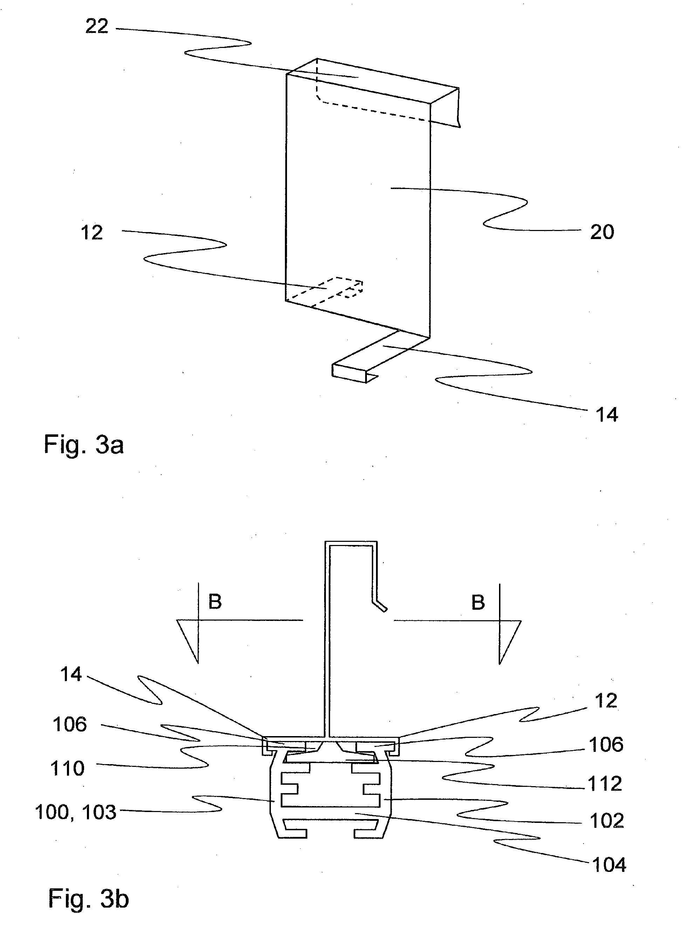

Figure 3a shows by way of an example a preferred embodiment of a fastener for a sunshade according to the invention viewed diagonally from above. The embodiment shown by the Figure differs from the fastener described above so that there between the first and the second fastening projections 12, 14 there is a wide intermediate area with no fastening projections at all. Furthermore, the free tips of the fastening projections turn towards each other. The tips of the fastening projections are thus of trough-like shape.

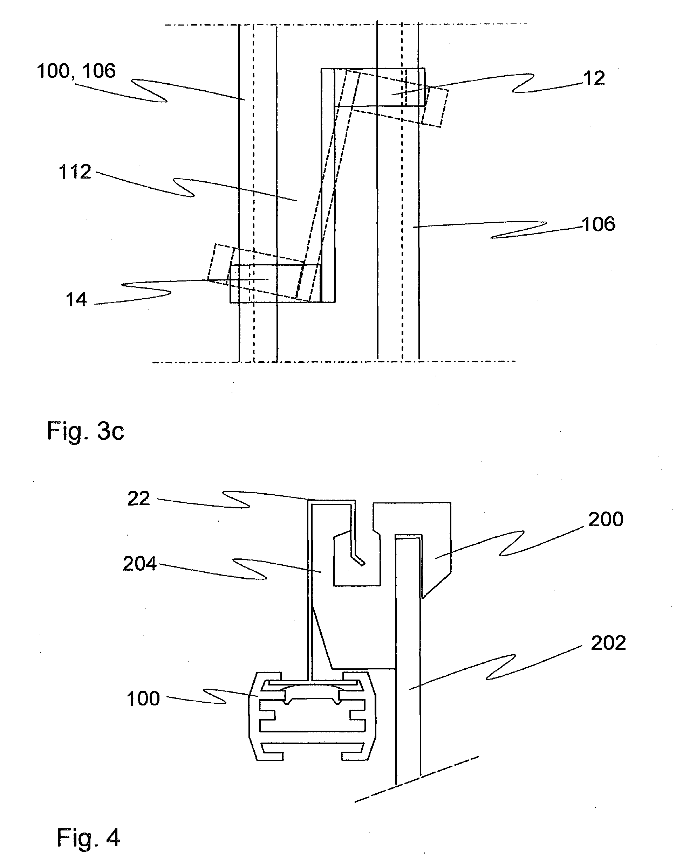

Figures 3b and 3c show by way of an example the fastening of the preferred embodiment of the fastener shown in Fig. 3a to the edge rail 100 of a sunshade. Figure 3b shows a fastener fastened to the edge rail in a cross-sectional view, and Figure 3c shows the fastener of Figure 3b in a top view, shown from the sectional plane B-B. The edge rail 100 shown in Figures 3b and 3c differs slightly in its cross-sectional shape from the edge rail described above. This edge rail comprises two sides, the first side 102 and the second side 103, joined together by a neck 104. The first and the second sides are mirror images to each other in their cross-section. In the upper edges of the sides there are edge ribbons 106 in longitudinal direction of the edge rail, which edge ribbons define a gap 110 between themselves and form a projection on the outer surfaces of the sides. Between the first side 102 and the second side 103 there is an elastic strip 112 made of plastic, leaning at its edges on the inner surfaces of the sides. On the upper surface of the strip there is a ridge pointing upwards.

The embodiment of the fastener according to the invention is fastened to the edge rail so that the projection of the edge ribbon 106 in the edge of the first side 102 takes its position in the trough in the tip of the first fastening projection 12, and the projection of the edge ribbon 106 in the edge of the second side 103 takes its position in the trough in the tip of the second fastening projection 14. The height of the ridge of the strip 112 can be dimensioned so that an installed fastener forces the strip to move slightly towards the neck 104. From the strip, made of elastic material, a lifting force is thereby applied to the installed fastener that pushes the trough-shaped tips of the fastening projections tightly against the projections of the edge ribbons. Between the edge ribbons and the fastening projections, and on the other hand, between the fastening projections and the strip there are frictional forces effecting and preventing the installed fastener from moving in relation to the edge ribbon.

Fastening of the fastener takes place so that the fastener is set on the edge rail 100 in an inclined position in relation to the longitudinal direction of the edge ribbon, shown by a broken line in Figure 3c, where the edge ribbon takes its position between the trough-shaped parts in the tips of the fastening projections. Thereby, the fastening projections 12, 14 have enough space to press themselves against the edge ribbon 106 of the edge rail. Thereafter, the fastener is pushed towards the strip 112 and at the same time rotated about an axis in the direction of the normal of the strip into the locking position shown by a continuous line in Figure 3c. In the locking position, the troughs at the tips of the fastening projections enclose the projections of the edge ribbons 106, and the longitudinal direction of the fastener is substantially parallel to the longitudinal direction of the edge rail 100. The fastener is detached from the edge rail by rotating the fastener in the opposite direction.

Figure 4 shows by way of an example a fastener for a sunshade according to the invention installed in the edge profile 200 of a balcony glazing. Balcony glazing is typically built from glazing elements which include a rectangular glass pane 202, in the upper and lower edges of which there is an edge profile 200 made of aluminium. In the edge of the edge profile, there is a groove, opening away from the middle of the glass pane, onto the wall 204 of which groove the fastener is hung by means of the trough-shaped fastening element 22 of the fastener. The width of the trough-shaped part of the fastening element can be dimensioned substantially to be as large as the greatest thickness of the wall, whereby the fastener stays in its position in the edge profile by means of tight fitting.

Above, some preferred embodiments of a fastener for a sunshade according to the invention have been described. The invention is not limited to the solutions described above, but the inventive idea can be applied in numerous ways within the scope set by the claims.

## Claims

1. A fastener for a sunshade, comprising a bracket part (20) with a first edge (16) extending in a longitudinal direction, a first fastening projection (12) projecting in a first direction from a plane of the racket part (20) at the edge (16), and a second fastening projection (14) projecting in a second direction from the plane of the bracket part at the edge (16), the first direction being different from the second direction, the width of said first and second fastening projections in the longitudinal direction being substantially smaller than the length of the first edge (16) of the fastener, **characterized in that** the first fastening projection (12) is arranged at a first end of the first edge (16) of the fastener when viewed in the longitudinal direction of the fastener, and the second fastening projection (14) is arranged at a second end of the first edge (16) of the fastener, opposite of the first end of the first edge (16), when viewed in the longitudinal direction of the fastener.

2. A fastener according to Claim 1, **characterized in that** the bracket part (20) is a plate-like element with the first edge (16), into which first edge the first fastening projection (12) and the second fastening projection (14) are arranged.

3. A fastener according to Claim 2, **characterized in that** the first and the second fastening projections (12, 14) are substantially parallel, plate-like elements, and the first fastening projection turns at the first edge (16) of the bracket part (20) to the first direction, and the second fastening projection turns at the first edge of the bracket part to the second direction.

4. A fastener according to any one of claims 2 or 3, **characterized in that** the bracket part (20) comprises a second edge (18) which second end comprises a fastening element (22) for fastening into the edge profile of a glazing.

5. A fastener according to Claim 4, **characterized in that** said fastening element (22) is formed by forming the second edge of the bracket part (20) into a trough-like shape.

6. A fastener according to any one of Claims 1-5, **characterized in that** it is a one-piece, substantially rigid part.

7. A fastener according to any one of Claims 1-6, **characterized in that** it is of metal material, preferably aluminium.

## Patentansprüche

1. Ein Befestigungselement für einen Sonnenschutz, umfassend ein Halterungsteil (20) mit einer ersten Kante (16), welche sich in eine longitudinale Richtung erstreckt, einen ersten Befestigungsvorsprung (12), welcher in eine erste Richtung aus der Ebene des Halterungsteils an der Kante (16) vorsteht, und einen zweiten Befestigungsvorsprung (14), welcher in eine zweite Richtung aus der Ebene des Halterungsteils an der Kante (16) vorsteht, wobei die erste Richtung unterschiedlich ist zur zweiten Richtung, und wobei die Breite der ersten und zweiten Befestigungsvorsprünge in longitudinaler Richtung wesentlich kleiner sind als die Länge der ersten Kante (16) des Befestigungselements, **dadurch gekennzeichnet, dass** der erste Befestigungsvorsprung (12) an einem ersten Ende der ersten Kante (16) des Befestigungselements, betrachtet in Längsrichtung des Befestigungselements, angeordnet ist, und der zweite Befestigungsvorsprung (14) an einem zweiten Ende der ersten Kante (16) des Befestigungselements gegenüber des ersten Endes der ersten Kante (16), betrachtet in Längsrichtung des Befestigungselements, angeordnet ist.

2. Ein Befestigungselement nach Anspruch 1, **dadurch gekennzeichnet, dass** das Halterungsteil (20) ein plattenartiges Element mit der ersten Kante (16) ist, wobei in der ersten Kante der erste Befestigungsvorsprung (12) und der zweite Befestigungsvorsprung (14) angeordnet sind.

3. Ein Befestigungselement nach Anspruch 2, **dadurch gekennzeichnet, dass** der erste und der zweite Befestigungsvorsprung (12, 14) im Wesentlichen parallele, plattenförmige Elemente sind, und der erste Befestigungsvorsprung von der ersten Kante (16) des Halterungsteils (20) in die erste Richtung absteht und der zweite Befestigungsvorsprung von der ersten Kante des Halterungsteils in die zweite Richtung absteht.

4. Ein Befestigungselement nach einem der Ansprüche 2 oder 3, **dadurch gekennzeichnet, dass** das Halterungsteil (20) eine zweite Kante (18) aufweist, wessen zweites Ende ein Befestigungselement (22) zur Befestigung in das Randprofil einer Glasscheibe umfasst.

5. Ein Befestigungselement nach Anspruch 4, **dadurch gekennzeichnet, dass** das genannte Befestigungselement (22) ausgebildet ist durch Formen der zweiten Kante des Halterungsteils (20) in eine trogartige Form.

6. Ein Befestigungselement nach einem der Ansprüche 1-5, **dadurch gekennzeichnet, dass** es ein einteiliges, im Wesentlichen starres Teil ist.

7. Ein Befestigungselement nach einem der Ansprüche 1-6, **dadurch gekennzeichnet, dass** es aus einem metallen Material, vorzugsweise Aluminium, ist.

## Revendications

1. Fixation pour un pare-soleil, comprenant une partie de support (20) avec un premier bord (16) s'étendant dans une direction longitudinale, une première partie saillante de fixation (12) faisant saillie dans une première direction d'un plan de la partie de support (20) au niveau du bord (16), et une deuxième partie saillante de fixation (14) faisant saillie dans une deuxième direction du plan de la partie de support au niveau du bord (16), la première direction étant différente de la deuxième direction, la largeur desdites première et deuxième parties saillantes de fixation dans la direction longitudinale étant sensiblement plus petite que la longueur du premier bord (16) de la fixation, **caractérisée en ce que** la première partie saillante de fixation (12) est agencée à une première extrémité du premier bord (16) de la fixation lorsqu'elle est vue dans la direction longitudinale de la fixation, et la deuxième partie saillante de fixation (14) est agencée à une deuxième extrémité du premier bord (16) de la fixation à l'opposé de la première extrémité du premier bord (16) lorsqu'elle est vue dans la direction longitudinale de la fixation.

2. Fixation selon la revendication 1, **caractérisée en ce que** la partie de support (20) est un élément en forme de plaque avec le premier bord (16), dans lequel premier bord, la première partie saillante de fixation (12) et la deuxième partie saillante de fixation (14) sont agencées.

3. Fixation selon la revendication 2, **caractérisée en ce que** les première et deuxième parties saillantes de fixation (12, 14) sont des éléments en forme de plaques sensiblement parallèles, et la première partie saillante de fixation tourne, au niveau du premier bord (16) de la partie de support (20), dans la première direction, et la deuxième partie saillante de fixation tourne, au niveau du premier bord de la partie de support, dans la deuxième direction.

4. Fixation selon l'une quelconque des revendications 2 et 3, **caractérisée en ce que** la partie de support (20) comprend un deuxième bord (18), laquelle deuxième extrémité comprend un élément de fixation (22) à fixer dans le profilé de bord d'un vitrage.

5. Fixation selon la revendication 4, **caractérisée en ce que** ledit élément de fixation (22) est formé en réalisant le deuxième bord de la partie de support (20) en la forme d'un canal.

6. Fixation selon l'une quelconque des revendications 1 à 5, **caractérisée en ce qu'**il s'agit d'une partie en une seule pièce, sensiblement rigide.

7. Fixation selon l'une quelconque des revendications 1 à 6, **caractérisée en ce qu'**elle est en un matériau métallique, de préférence de l'aluminium.
